# EUROPÄISCHE PATENTSCHRIFT

(11) **EP 2 036 001 B1**
(45) Veröffentlichungstag und Bekanntmachung des Hinweises auf die Patenterteilung: **28.11.2012**
(21) Anmeldenummer: 07764762.6
(22) Anmeldetag: 21.06.2007
(51) Int. Cl.: G06K 7/00, G06K 19/077, G09F 3/02, H01Q 7/00, H01Q 23/00, H04B 1/59, H05K 1/18

(54) **TRANSPONDER MIT ELEKTRONISCHEM SPEICHERCHIP UND MAGNETISCHER RINGANTENNE**
TRANSPONDER COMPRISING AN ELECTRONIC MEMORY CHIP AND MAGNETIC CIRCULAR ANTENNA
TRANSPONDEUR COMPRENANT UNE PUCE MÉMOIRE ÉLECTRONIQUE ET UNE ANTENNE CIRCULAIRE MAGNÉTIQUE

(30) Priorität: 21.06.2006 DE 102006028827
(43) Veröffentlichungstag der Anmeldung: 18.03.2009
(73) Patentinhaber: Dynamic Systems GmbH, 82234 Wessling (DE)
(72) Erfinder: LOSSAU, Harald, 81377 München (DE)
(74) Vertreter: Zeuner Summerer Stütz
(86) Internationale Anmeldenummer: PCT/EP2007/005470
(87) Internationale Veröffentlichungsnummer: WO 2007/147593

(56) Entgegenhaltungen:
- DE-A1- 10 258 670
- US-A- 5 708 419
- US-A1- 2002 050 929
- US-A1- 2002 121 685
- US-A1- 2004 177 492
- US-A1- 2004 195 319
- US-A1- 2005 122 211
- US-A1- 2005 190 060
- US-A1- 2006 043 198
- US-A1- 2006 054 710
- US-A1- 2006 055 542
- US-A1- 2006 101 272
- US-B1- 6 522 308

## Beschreibung

### Technisches Gebiet

Die Erfindung betrifft ein Transpondersystem mit elektronischem Speicherchip und magnetischer Ringantenne. Die Erfindung betrifft ferner ein Herstellungsverfahren.

### Stand der Technik

Transpondertechnologie wird seit mehreren Jahren in vielen Anwendungen erfolgreich eingesetzt: Der berührungslose Firmenausweis, der den Zutritt zum Arbeitsplatz freigibt oder die Wegfahrsperre auf Basis eines in den Fahrzeugschlüssel eingebauten Transponders sind typische Beispiele. Dabei erweist sich die Transponder- bzw. RFID-Technologie robuster als herkömmliche Kennzeichnungssysteme, insbesondere Etiketten mit Barcodes: Für verschmutzte, verdeckte oder beschädigte Barcodes stehen trotz einer wachsenden Zahl von eingebauten Redundanzen die Chancen auf Erfassung schlecht. Dagegen bietet die von einer optischen Sichtverbindung unabhängige RFID-Technologie auch bei stark verschmutzten Datenträgern eine konstant hohe Lesequalität. Weitere Vorteile der RFID-Technologie sind die prinzipiell hohen Speicherfähigkeiten (aktuell bis zu 64 kByte), die Möglichkeit der Umprogrammierung und der verschlüsselten Datenübertragung.

Ein Transponder besteht üblicherweise aus einem Koppelelement (Spule oder Mikrowellenantenne) und einem elektronischen Mikrochip. Passive Transponder enthalten keine eigene Spannungsversorgung (Batterie) und verhalten sich außerhalb des Ansprechbereichs eines Lesegeräts vollkommen passiv. Erst innerhalb des Ansprechbereichs eines Lesegeräts wird der Transponder aktiviert. Die zum Betrieb des passiven Transponders benötigte Energie wird ebenso wie Takt und Daten durch die Koppeleinheit kontaktlos zum Transponder übertragen.

Unterschieden wird typischerweise zwischen induktiv bzw. magnetisch gekoppelten Transpondersystemen, die im Frequenzbereich von Niederfrequenz (<150 kHz) bis Hochfrequenz (HF, 13,56 MHz) zum Einsatz kommen, und elektromagnetisch gekoppelte Systeme, die im Ultrahochfrequenz- und Mikrowellenbereich (UHF ab 866 MHz) eingesetzt werden.

Induktive Systeme arbeiten im Nahfeld - mit magnetischen Ringantennen, deren Umfang oft kleiner ist als ein Zehntel der Wellenlänge λ. Sie zeichnen sich im Allgemeinen durch kompakte Bauformen und einen klar definierten Lesebereich aus.

Dagegen zeichnen sich elektromagnetisch gekoppelte Systeme durch Reichweiten größer als die Wellenlänge λ aus. Dabei kommen Antennen mit elektrischem Nahfeld, insbesondere Dipolantennen, zum Einsatz, die relativ groß sind mit einer Länge in der Größenordnung von λ/2.

Für magnetische Ringantennen sind folgende Bauformen bekannt (siehe Rothammels Antennenbuch, DARC Verlag Baunatal, 12. Auflage, 2001, Kapitel 16):
1. Magnetische Antennen mit untenliegender Abstimmung und kapazitiver Auskopplung,
2. Magnetische Antennen mit obenliegender Abstimmung und galvanischer Auskopplung und
3. Magnetische Antennen mit induktiver Auskopplung.

Transponder können in hohen Stückzahlen kostengünstig in Form von Transponder-Etiketten bzw. so genannten Smart Labels hergestellt werden.

Diese enthalten eine Folie als Träger, auf der eine dünne - geätzte oder gedruckte - Antenne aufgebracht ist. Der Chip wird dabei entweder direkt mit hohen Präzisionsanforderungen oder indirekt als Chipmodul bzw. Strap aufgebracht und elektrisch leitfähig kontaktiert. Um die leitfähige Verbindung herzustellen, kommen Verfahren wie leitfähiges Kleben, Bonden (Verschweißen) oder Crimpen zum Einsatz, die jeweils zusätzliche Kosten verursachen.

Bei der Kennzeichnung von kleinen Gegenständen stoßen die bekannten Transpondersysteme an technische Grenzen: Bei induktiv gekoppelten Systemen sind zwar kleine Bauformen möglich, jedoch nehmen die Induktivität und die Lesereichweite mit kleiner werdenden Querschnittflächen der Ringantenne ab. Aufgrund der kleinen Induktivität ist bei den üblichen Transponderfrequenzen induktiver Systeme eine große Kapazität erforderlich, die sich typischerweise in höheren Kosten niederschlägt. Auch der Kennzeichnung von kleinen Gegenständen ist daher eine möglichst große Antennenquerschnittsfläche anzustreben.

Elektromagnetische Antennen können aufgrund der mit der Frequenz vorgegeben Länge der Dipolantenne nicht beliebig klein gefaltet werden. Dabei wäre der UHF- bzw. Mikrowellenbereich aufgrund der höheren Frequenz in Bezug auf die Lesereichweite im Vorteil.

Die Druckschrift DE 102 58 670 A1 betrifft einen Transponder zur berührungslosen Übertragung von Daten. Der erfindungsgemäße Transponder verfügt über eine elektronische Schaltung sowie eine Antenneneinrichtung und zeichnet sich dadurch aus, dass die Antenneneinrichtung wenigstens zwei gemeinsam betreibbare Schwingkreise aufweist, die voneinander galvanisch getrennt ausgebildet sind.

Die Druckschrift US 2005/0190060 A1 offenbart mit Bezug auf Fig. 7C einen Transponder mit Speicherchip und magnetischer Ringantenne, die nur aus einer Windung besteht. Der Transponder arbeitet bei 860 MHz.

Die Druckschrift US 2006/0055542 A1 offenbart eine RFID Vorrichtung, die eine Antennenstruktur enthält, die gute Leistung über einen Bereich verschiedener Positionen relativ zu nahegelegenen Materialien liefert, wie etwa metallischen Gegenständen in einem Karton oder in einem sonstigen Behälter. Die Antennenstruktur enthält Komponsationselemente, die mit den nahegelegenen Materialien wechselwirken, um gute Leistung über dem Bereich der unterschiedlichen Positionen zu liefern. Die Komponsationselemente umfassen elektrische Komponsationselemente, die mit den nahegelegenen Materialien in erster Linie über elektrische Felder wechselwirken und magnetische Komponsationselemente, die mit den nahegelegenen Materialien in erster Linie über magnetische Felder wechselwirken. Die elektrischen Komponsationselemente und die magnetischen Komponsationselemente können ausgewählt werden und können innerhalb der Antennenstruktur so positioniert sein, dass die Leistung der Antennenstruktur im Wesentlichen unverändert oder über den Bereich der unterschiedlichen Positionen mindestens annehmbar ist.

Die Druckschrift US 2004/0195319 A1 betrifft ein RFID Detektionssystem mit einem Nähe-Positionsgeber, der ein elektrisches Feld zum Auslesen einer antennenlosen RFID Vorrichtung erzeugt, oder zum Auslesen anderer, mit einer Antenne versehenen RFID Vorrichtungen. Der Nähe-Positionsgeber umfasst eine oder mehrer Leiter, die eine Übertragungsleitung-Struktur bilden, die ein starkes elektrisches RF Feld der Nähe des Positionsgebers erzeugen kann. Das kurzreichweitige RF Feld erlaubt eine Kopplung an antennenlose oder mit Antennen versehene RFID Vorrichtungen, die sich in der Nähe des Nähe-Positionsgeber befinden.

Die Druckschrift US 2004/0177492 A1 betrifft ein Verfahren zum Herstellen eines Resonanzfrequenzetiketts mit einer Resonanz bei einer vorbestimmten Frequenz.

Aus der WO 2006/128448 ist eine Anordnung mit einem Transponder auf einem metallischen Bauteil, das eine Schlitzantenne enthält, bekannt.

Die Druckschrift US-A-5 708 419 betrifft ein Verfahren zum elektrischen Verbinden einer integrierten Schaltung mit wenigstens einem elektrischen Leiter auf einem biegsamen Substrat.

Die Druckschrift US 2006/101272 A1 betrifft einen Aufkleber zum Identifizieren eines mit dem Aufkleber versehenen Gegenstands in kabelloser Weise mittels elektromagnetischer Strahlung. Der Aufkleber umfasst mindestens eine Antenne, die ein einfallendes elektromagnetisches Signal aufnimmt und Mittel zum Verringern des Einflusses von Streukapazitäten, die von dem Gegenstand auf die resonanten Eigenschaften des Aufklebers ausgeübt werden.

Die Druckschrift US 2002/121685 A1 offenbart einen berührungslosen Träger mit einem Muster auf der oberen Schicht mit einem ersten Antennenspulenteil bestehend aus einem Leitungsmuster, das spiralförmig gelegt ist und ersten Kapazitätsmustern und einem Muster in einer unteren Schicht mit, in derselben Weise, einem zweiten Antennenspulenteil bestehend aus einem Leitungsmuster, das spiralig gelegt ist und zweiten Kapazitätsmustern, wobei die jeweiligen Antennenspulenteile wenigstens teilweise dieselbe äußere Form haben, wobei das Muster auf der oberen Schicht und das Muster auf der unteren Schicht jeweils auf einer ersten und einer zweiten Flächen einer dielektrischen Schicht derart angeordnet sind, dass wenigstens die äußere Form der Muster der oberen Schicht und der unteren Schicht miteinander übereinstimmen, so dass ein Resonanzkreis gebildet wird, wobei die Wicklungen eines jeden Antennenspulenteils einen Abschnitt einschließt, der die Form entsprechend der äußeren Form der Spule eines Datenträgerchips oder eines Datenträgermoduls mit einer On-Chip-Spule hat und ein dicht ausgebildetes Leitungsmuster hat, und wobei der Datenträger-Chip oder das Datenträger-Modul auf einem der Abschnitte des dicht geformten Leitungsmuster derart montiert ist, dass der Datenträger-Chip oder das Datenträger-Modul teilweise mit der äußeren Form der Abschnitte übereinstimmt.

RFID-Transponder, die mit einer Schlitzantenne zusammenwirken, sind bekannt aus EP 1 921 570 und aus der US 2003 / 112192.

Die Druckschrift US 2006/054710 A1 betrifft eine RFID-Vorrichtung mit einer dielektrischen Schicht, einer Antennenstruktur auf einer ersten Seite der dielektrischen Schicht und einem RFID-Chip, der an die Antennenstruktur gekoppelt ist. Die Antennenstruktur enthält ein oder mehrere Kompensationselemente, die zumindest teilweise die Auswirkungen einer Betriebsumgebung in der Nähe der Antennenstruktur kompensieren.

Die US 2006/0043198 offenbart einen RFID-Transponder, der reaktiv mit einer Sekundärantenne gekoppelt ist.

### Darstellung der Erfindung

Hier setzt die Erfindung an. Der Erfindung, wie sie in den Ansprüchen definiert ist, liegt die Aufgabe zugrunde, die Nachteile des Stands der Technik zu vermeiden und insbesondere einen gattungsgemäßen Transponder anzugeben, der auch in kleinen Bauformen eine gute Lesereichweite aufweist und darüber hinaus kostengünstig produziert werden kann.

Diese Aufgabe wird erfindungsgemäß durch die Merkmale der unabhängigen Ansprüche gelöst. Weitere vorteilhafte Details, Aspekte und Ausgestaltungen der vorliegenden Erfindung ergeben sich aus den abhängigen Ansprüchen, der Beschreibung, den Figuren und den Beispielen.

Im Rahmen der vorliegenden Erfindung werden die folgenden Abkürzungen und Begriffe benutzt:
Die Abkürzung RFID (Radio Frequency Identification) wird hier allgemein für Identifkationssysteme mit kontaktloser elektromagnetischer Energie- und Datenübertragung verwendet - unabhängig von der eingesetzten Trägerfrequenz.

Unter Transponderauslesegerät wird ein System verstanden, das über elektromagnetische Felder einen Transponder mit Energie versorgen, Daten aus dessen Chip auslesen und optional auch Daten auf den Chip schreiben kann.

Nach einem ersten Erfindungsaspekt ist bei einem Transponder der eingangs genannten Art vorgesehen, dass die Ringantenne eine elektrische leitfähige Spule mit mindestens einer Windung und einen Kondensator umfasst und dass der Transponder auf eine Arbeitsfrequenz von 860 MHz oder mehr für UHF oder den Mikrowellenbereich ausgelegt ist.

Bevorzugt umfasst die Ringantenne dabei eine Spule mit nur einer Windung. Die Induktivität der Spule ist mit Vorteil kleiner ist als 1 µH, bevorzugt kleiner 0,2 µH, und der Umfang der Spule ist zweckmäßig kleiner ist als 20 cm, bevorzugt kleiner 4 cm. Die Kapazität des Kondensators ist vorteilhaft aus dem Bereich 0,1 pF bis 20 pF, bevorzugt aus dem Bereich 0,5 pF bis 5 pF ausgewählt.

Nach einem zweiten Erfindungsaspekt ist bei einem Transponder der eingangs genannten Art vorgesehen, dass die Ringantenne eine elektrische leitfähige Spule mit mindestens einer Windung und einen Kondensator umfasst, wobei der Kondensator als Dielektrikum eine dünne Isolatorfolie aufweist, die gleichzeitig als Trägerfolie für die Spule und/oder den Chip dient.

In beiden Erfindungsaspekten werden, wie nachfolgend genauer ausgeführt, insbesondere folgende Vorteile verwirklicht:
- kompakte Bauform;
- einfache, kostengünstige Herstellung;
- flexible Einsatzmöglichkeiten;
- einfache Abstimmmöglichkeit nach Herstellung eines Transponderhalbzeugs;
- einfache Montage auf verschiedene Gegenstände.

Bei dem Transponder des zweiten Erfindungsaspekts ist die Isolatorfolie vorzugsweise eine Kunststofffolie, insbesondere eine Polyester (PET)-Folie, eine Polyimid-Folie oder eine Polypropylen (PP)-Folie.

Dabei ist der gesamte Transponder auf der Isolatorfolie aufgebaut.

Während grundsätzlich Spule und Speicherchip auf derselben Seite der Isolatorfolie angeordnet sein können, ist es - bei einer Variante der Erfindung - vor allem wegen den geringeren Anforderungen an die Positionierungsgenauigkeit bevorzugt, dass die Spule und der Speicherchip auf gegenüberliegenden Oberflächen der Isolatorfolie aufgebaut sind.

In einer bevorzugten Ausgestaltung des zweiten Erfindungsaspekts ist eine zweite Isolatorfolie vorgesehen, die mit der ersten Isolatorfolie so verbunden, insbesondere verklebt oder verschweißt ist, dass die Spule zwischen den beiden Isolatorfolien verpackt ist.

Nach einer besonders vorteilhaften Weiterbildung der Erfindung umfasst der Transponder zusätzlich zur Ringantenne eine Sekundärantenne, die über eine Isolatorfolie elektrisch an die Ringantenne gekoppelt ist. Der Begriff "elektrische Kopplung" ist dabei als Oberbegriff zu verstehen, der sowohl eine kapazitive als auch eine induktive Kopplung sowie eine Kombination aus beiden Kopplungsarten umfasst.

Dabei ist die Sekundärantenne über die Trägerfolie der Ringantenne elektrisch an die Ringantenne gekoppelt. Alternativ oder zusätzlich kann die Sekundärantenne auf einer Sekundärantennen-Trägerfolie vorliegen und über diese Sekundärantennen-Trägerfolie elektrisch an die Ringantenne gekoppelt sein. Selbstverständlich kann die Sekundärantenne auch dann auf einer Sekundärantennen-Trägerfolie vorliegen, wenn die elektrische Kopplung im Wesentlichen über die Trägerfolie der Ringantenne erfolgt.

Als Trägerfolie für die Sekundärantenne kommt insbesondere eine Kunststofffolie, insbesondere eine Polyester (PET)-Folie, eine Polyimid-Folie oder eine Polypropylen (PP)-Folie, in Betracht.

Die Sekundärantenne ist nach Art einer Schlitzantenne ausbildet. Insbesondere kann die Sekundärantenne durch eine Aussparung in einer ansonsten vollflächigen Metallschicht gebildet sein. Dies kann beispielsweise dadurch erreicht werden, dass die Sekundärantenne durch Herausätzen einer Aussparung aus einer vollflächigen Metallfolie, insbesondere einer Kupfer- oder Aluminiumfolie, oder durch strukturiertes Drucken einer leitfähigen Paste, insbesondere einer Silberleitpaste, gebildet wird.

Der Transponder ist zur Kennzeichnung eines Gegenstands bestimmt, wobei die Sekundärantenne einen Teil des zu kennzeichnenden Gegenstands bildet. Beispielsweise kann der zu kennzeichnende Gegenstand eine metallische Komponente aufweisen, die so ausgebildet wird, dass sie als Sekundärantenne eines Transponders der beschriebenen Art dienen kann. Dann wird der Transponder mit Transponderchip und magnetischer Ringantenne auf der dünnen Isolatorfolie als Träger so auf die als Sekundärantenne dienende metallische Komponente des Gegenstands aufgebracht, dass die magnetische Ringantenne des Transponders und die Sekundärantenne elektrisch (kapazitiv und/oder induktiv) miteinander koppeln.

Die Erfindungsvariante mit einer zusätzlichen Sekundärantenne erlaubt durch die Kombination zweier unterschiedlicher Bestandteile eine besonders rationelle und flexible Herstellung: Zum einen enthält der Transponder eine komplexere, aber kleine und standardisierte Komponente, nämlich den Transponderchip auf magnetischer Ringantenne mit einem typischen Durchmesser von nur etwa 1 cm, für die höhere Anforderungen an die Präzision der Fertigung gestellt werden. Die Empfangscharakteristik dieses Transponders wird durch die Kombination der im magnetischen Nahfeld besonders gut geeigneten Ringantenne mit einer Sekundärantenne verbessert, die im Allgemeinen einfacher herstellbar, wesentlich größer und besonders für das elektromagnetische Femfeld geeignet ist.

Eine typische einfache, größere und anwendungsspezifisch anpassbare Sekundärantenne ist als Schlitzantenne ausgebildet und weist eine Ausdehnung in der Größenordnung der halben Wellenlänge, typischerweise von 10 -17 cm auf. Durch eine Sekundärantenne ist eine flexiblere Anpassung des Transponders beispielsweise an verschiedene Materialien und/oder Umgebungsbedingungen lediglich durch Anpassung der Sekundärantenne möglich.

Insbesondere kann bei solchen Gestaltungen bei der Kennzeichnung eines zumindest teilweise metallischen Gegenstands der Gegenstand selbst als Sekundärantenne des Transponders Verwendung finden.

Der Transponder ist vorzugsweise auf eine Arbeitsfrequenz oberhalb von 860 MHz, also im UHF und Mikrowellenbereich ausgelegt, da hier mit der erfindungsgemäßen Ringantenne kompakte Bauformen realisiert werden können.

Die Isolatorfolie ist mit Vorteil dünner als 50 µm, bevorzugt liegt ihre Dicke im Bereich zwischen 10 µm und 40 µm.

Die Spulenfläche A der leitfähigen Spule ist in beiden Erfindungsaspekten zweckmäßig kleiner als 40 cm², und liegt bevorzugt im Bereich zwischen 0,06 cm² und 4 cm², besonders bevorzugt im Bereich zwischen 0,18 cm² und 1 cm².

Die Transponder nach beiden Erfindungsaspekten können mit Vorteil mit einer Klebstoffschicht für den Einsatz der Transponder als selbstklebende Transponderetiketten (so genannte Smart Label) versehen sein.

Die Spule hat nur eine Windung. Das bringt den zusätzlichen Vorteil, dass keine Brücke zum Verbinden der Spulenenden erforderlich ist.

Bei allen Verfahrensaspekten umfasst die Spule bei einer vorteilhaften Verfahrensführung nur eine Windung, und der Transponderbaustein wird, insbesondere als Chip oder Chipmodul, so aufgebracht, dass er direkt ohne eine Brücke an beiden Enden der Spule gekoppelt wird.

In allen Verfahrensvarianten kann ein Transponderbaustein aufgebracht, insbesondere aufgeklebt und durch Schweißen oder Bonden elektrisch mit der Spule verbunden werden.

Vorzugsweise wird der Transponder mit einer Schutzschicht versehen. Die Schutzschicht ist dabei bevorzugt durch eine aufgebrachte Lack- oder Kunststoffschicht oder einen passend umfassenden Schutzkörper gebildet.

Nachfolgend soll die Erfindung anhand von Ausführungsbeispielen im Zusammenhang mit den Zeichnungen näher erläutert werden. Dabei sind nur die für das Verständnis der Erfindung wesentlichen Elemente dargestellt. Es zeigen:
- Figur 1: in Aufsicht einen Transponder mit magnetischer Ringantenne, die nur eine Windung umfasst, und für den UHF-Frequenzbereich geeignet ist;
- Figur 2: ein Ausführungsbeispiel eines erfindungsgemäßen Transponders, bei der die Trägerfolie gleichzeitig als Dielektrikum für den Kondensator der Ringantenne dient, wobei (a) eine Aufsicht und (b) einen 20-fach gestreckten Querschnitt entlang der Linie B-B von (a) zeigt;
- Figur 3: die Kennzeichnung eines zylinderförmigen Gegenstandes mit Hilfe eines selbstklebenden Transponderhalbzeugs: a) Selbstklebendes Transponderhalbzeug mit offener Spule, b) Aufkleben des Transponderhalbzeugs auf den Gegenstand, c) fertiger, mittels Transponder gekennzeichneter Gegenstand;
- Figur 4: die Kennzeichnung eines zylinderförmigen Gegenstandes mit Hilfe eines selbstklebenden Transponderhalbzeugs, das so geformt ist, dass sich die Resonanzfrequenz weder durch Positionierungsungenauigkeiten noch durch Variationen im Umfang des Gegenstands ändert;
- Figur 5: einen Transponder mit Transponderchip, Ringantenne und einer durch eine Dipolantenne gebildete Sekundärantenne; und
- Figur 6: einen Transponder mit Transponderchip, Ringantenne und einer durch eine Schlitzantenne gebildete Sekundärantenne.

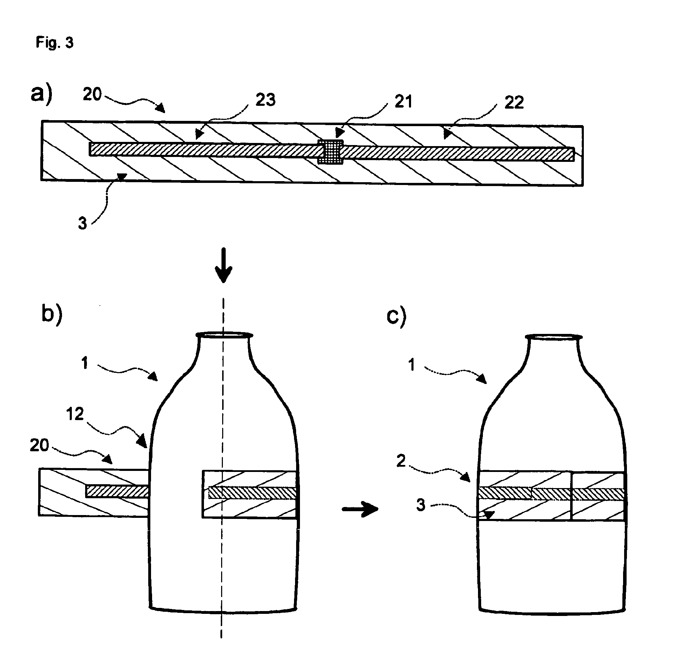

Bei den Beispielen aus Fig. 3, 4 und 5 ist keine Schlitzantenne vorhanden. Diese sind daher keine Ausführungsbeispiele der vorliegenden Erfindung, sondern stellen Hintergrundinformation dar.

### Wege zur Ausführung der Erfindung

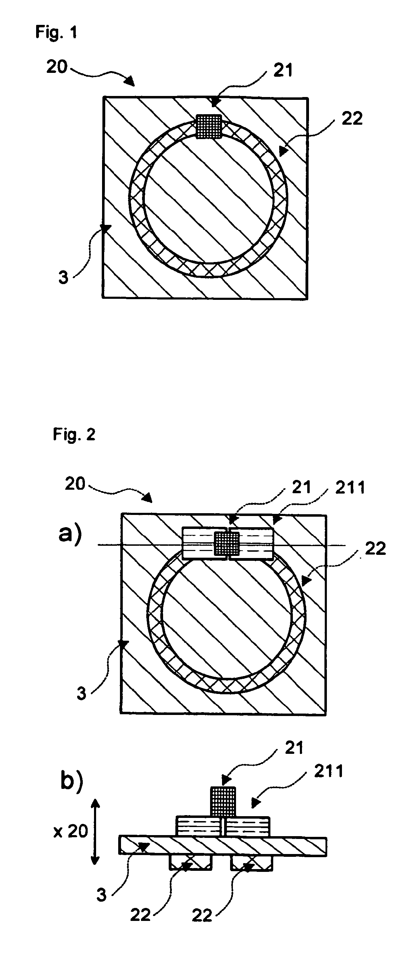

Zunächst wird mit Bezug auf die Fig. 1 ein Transponder mit magnetischer Ringantenne, die nur eine Windung umfasst, erläutert.

In Fig. 1 bezeichnet das Bezugszeichen 21 den Transponderchip, 22 die Antennenspule und 3 einen Träger aus Kunststoff. Der Chip ist dabei direkt über ein Flip-Chip-Verfahren auf die Spule aufgebracht. Die Antennenspule hat einen Durchmesser von lediglich 1 cm, deren Induktivität beträgt dabei etwa 0,1 µH. Zusammen mit einem im Transponderchip integrierten Kondensator entsteht eine Ringantenne, die auf 868 MHz abgestimmt ist.

Spule 22 und Chip 21 können, wie im Ausführungsbeispiel der Fig. 1 auf derselben Seite des Kunststoffträgers 3 aufgebracht sein, oder sie können, wie in den nachfolgenden Ausführungsbeispielen, auf gegenüberliegenden Seiten des Trägers 3 angeordnet sein.

Figur 2 zeigt eine Ausführungsform des erfindungsgemäßen Transponders, bei dem die Trägerfolie 3 der Antennenspule 22 gleichzeitig als Dielektrikum für den Kondensator der Ringantenne fungiert. Fig. 2a zeigt den Transponder in Aufsicht, während Fig. 2b einen um den Faktor 20 gestreckten Querschnitt entlang der in Fig. 2a gezeigten gestrichelten Linie B-B repräsentiert.

In Fig. 2a ist der Chip indirekt als Chipmodul 211 aufgebracht. Vorteil dabei ist, dass die Anforderungen an die Präzision beim Aufbringen des Chipmoduls geringer sind. Die Ringantenne wird einerseits aus der Antennenspule 22 als induktives Element und andererseits aus zwei Kondensatoren gebildet, die wiederum aus den übereinander liegenden Abschnitten der Antennenspule 22 und des Chipmoduls 211 als Elektroden und der Folie 3 als Dielektrikum bestehen.

Ein Vorteil dieser Ausführungsform liegt neben der kompakten Bauform in der einfachen Montage des Chipmoduls, die nicht elektrisch leitfähig ausgeführt werden muss. Außerdem kann durch die Dicke der Folie und insbesondere auch durch die Positionierung des Chipmoduls der Transponder abgestimmt werden - auch nachdem sowohl Chipmodul 211 als auch die Antennenspule 22 schon gefertigt sind.

Fig. 3 zeigt die Kennzeichnung einer Flasche mit Hilfe eines selbstklebenden Transponderhalbzeugs. Das selbstklebende Transponderhalbzeug 20 (Fig. 3a) ist auf einer selbstklebenden Folie 3 aufgebaut und umfasst den Transponderchip 21, sowie Leiterbahnen 22 und 23 zum Aufbau der Transponderspule, wobei der Transponderchip 21 mittels Flip-Chip-Verfahren mit den beiden Leiterbahnen kontaktiert ist. Die Leiterbahnen 22, 23 sind so angeordnet, dass deren offenen Enden übereinander zu liegen kommen, wenn das Transponderhalbzeug auf einen zylinderförmigen Gegenstand mit einem vorgegebenen Umfang verklebt wird.

In Fig. 3b ist dargestellt, wie das Transponderhalbzeug 20 auf den zylinderförmigen Abschnitt 12 einer Flasche 1 aufgeklebt wird. Bei vollständig aufgeklebtem Transponderhalbzeug (Fig. 3c) bilden die Leiterbahnen 22, 23 zusammen mit der Folie 3 eine Ringantenne, die zusammen mit dem kontaktierten Chip einen funktionsfähigen Transponder 2 ergibt. Die Folie 3 bildet dabei einerseits das Dielektrikum für einen Kondensator, der im überlappenden Bereich der Leiterbahnen 22 und 23 gebildet wird, und andererseits eine durchgehende Schutzschicht für den Transponder. Sie kann dabei gleichzeitig als bedruckbares Etikett für die Flasche dienen.

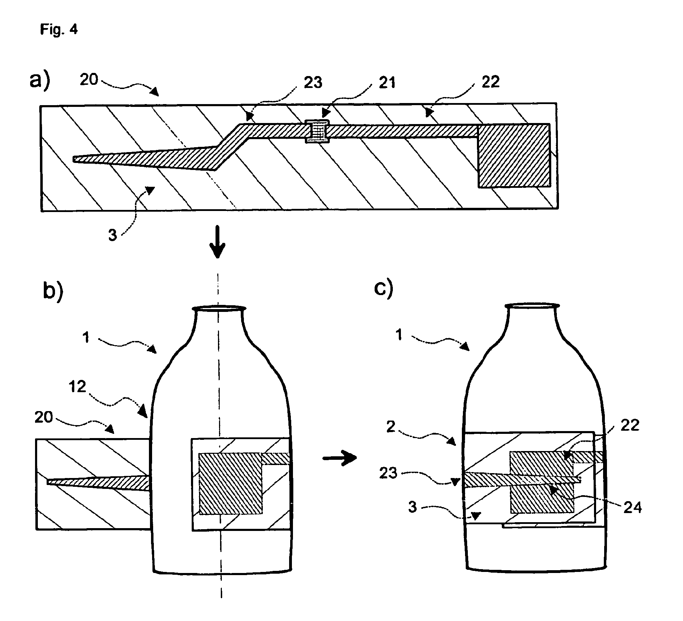

Fig. 4 zeigt die Kennzeichnung einer Flasche mit Hilfe eines selbstklebenden Transponderhalbzeugs, dessen Anwendung unempfindlich gegenüber Positionierungsungenauigkeiten sowie Variationen im Umfang der Flasche ist. Die Leiterbahnen 22 und 23 sind wiederum so angeordnet, dass deren offenen Enden übereinander zu liegen kommen, wenn das Transponderhalbzeug auf einen zylinderförmigen Gegenstand mit einem vorgegebenen Umfang verklebt wird.

Darüber hinaus sind die Leiterbahnen 22 und 23 so geformt, dass im Bereich der übereinander liegenden Teilabschnitte 24 der beiden Leiterbahnen, die eine Leiterbahn 22 eine wesentlich größere Ausdehnung hat als die andere Leiterbahn 23. Bei Positionierungenauigkeiten, d. h. bei leichten Verschiebungen der Leiterbahnen 22 und 23 relativ zueinander, bleibt dadurch die Fläche des überlappenden Teilabschnitts 24 und damit die Kapazität des daraus gebildeten Kondensators nahezu konstant.

Weiterhin nimmt die Breite der Leiterbahn 23 nach außen hin ab. Beim Aufbringen des Halbzeugs auf Flaschen verschiedener Durchmesser nimmt die Größe des überlappenden Teils 24 der Leiterbahnen ab, je größer der Durchmesser - innerhalb eines zugelassenen Bereichs - ist. Damit nimmt auch die Kapazität des daraus gebildeten Kondensators entsprechend ab und gleicht die zunehmende Induktivität des aus den Leiterbahnen gebildeten Antennenrings derart aus, so dass die Resonanzfrequenz des Transponders - innerhalb des zugelassenen Bereichs praktisch konstant bleibt.

Insgesamt wird damit eine Unempfindlichkeit des Transponderaufbaus gegenüber Positionierungsungenauigkeiten bei der Montage als auch gegenüber Variationen im Umfang der gekennzeichneten Flaschen erreicht.

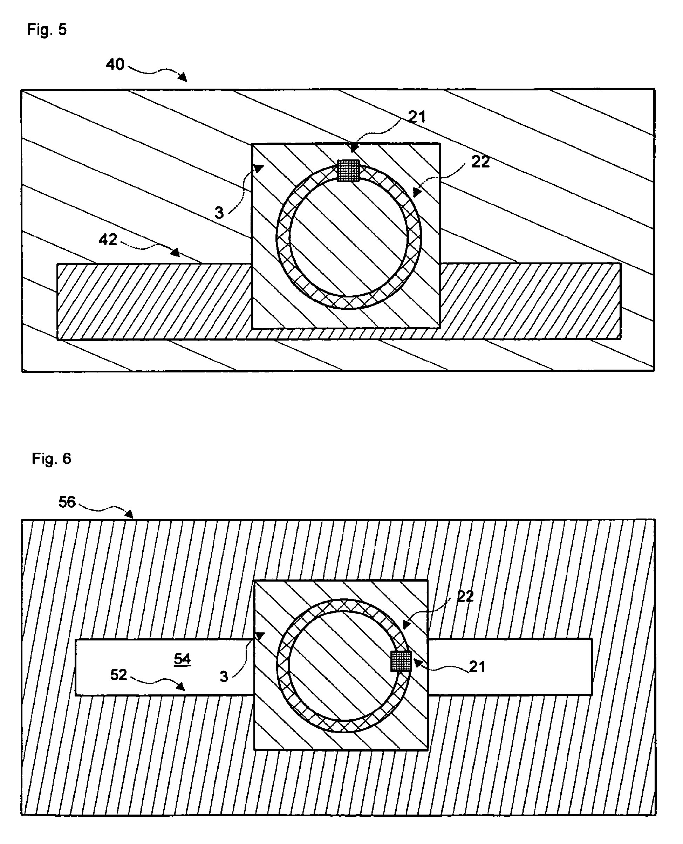

Figur 5 zeigt einen Transponder mit Transponderchip 21, Ringantenne 22 auf einer Trägerfolie 3 und einer Dipolantenne 42 als Sekundärantenne. Die Dipolantenne 42 ist dabei auf einer weiteren Trägerfolie 40 aufgebracht und über die Trägerfolie 3 elektrisch an die Ringantenne 22 angekoppelt.

Das Ausführungsbeispiel der Fig. 6 zeigt einen Transponder mit Transponderchip 21, Ringantenne 22 auf einer Trägerfolie 3 und einer Schlitzantenne 52, die aus einem Schlitz 54 in einem metallischen Objekt 56 besteht. Die Schlitzantenne 52 ist elektrisch über die Trägerfolie 3 an die Ringantenne 22 angekoppelt.

Die Transponder der Figuren 5 und 6 bieten durch Kombination zweier Bestandteile (Transponder mit Ringantenne und Sekundärantenne) eine besonders hohe Vielseitigkeit. Sie enthalten nämlich einerseits eine relativ komplexe, aber kleine und standardisierte Komponente (Transponder mit Ringantenne) und kombinieren diese Komponente zur Verbesserung der Empfangscharakteristik dieses Transponders mit einer für das elektromagnetische Femfeld optimierten Sekundärantenne. Dadurch kann der Transponder nur durch Anpassung der Sekundärantenne flexibel an verschiedene Materialien bzw. Umgebungsbedingungen angepasst werden.

## Patentansprüche

1. System bestehend aus einem Transponder und einem Gegenstand, zu dessen Kennzeichnung der Transponder bestimmt ist, wobei
- der Transponder einen elektronischen Speicherchip (21) und eine magnetische Ringantenne aufweist,
- die Ringantenne eine elektrische leitfähige Spule (22) mit nur einer Windung und einen Kondensator umfasst,
- der Umfang der Spule (22) kleiner ist als 20 cm,
- der Transponder auf eine Arbeitsfrequenz von 860 MHz oder mehr ausgelegt ist,
**dadurch gekennzeichnet, dass**
- der zu kennzeichnende Gegenstand eine **Metallschicht** (56) aufweist, die nach dem Aufbringen des Transponders auf den Gegenstand als Sekundärantenne in Form einer Schlitzantenne (52) dient, die durch eine Isolatorfolie hindurch aufgrund elektromagnetischer Wechselwirkung an die Ringantenne des Transponders gekoppelt ist, wobei die Schlitzantenne durch eine Aussparung (54) in der ansonsten vollflächigen Metallschicht (54) gebildet ist.

2. System nach Anspruch 1, **dadurch gekennzeichnet, dass** die Sekundärantenne (52) durch die Trägerfolie (3) der Ringantenne hindurch aufgrund elektromagnetischer Wechselwirkung an die Ringantenne gekoppelt ist.

3. System nach Anspruch 1 oder 2, **dadurch gekennzeichnet, dass** die Isolatorfolie eine Kunststofffolie ist, insbesondere eine Polyester-Folie, eine PET-Folie, eine Polyimid-Folie oder eine Polypropylen-Folie.

4. System nach einem der Ansprüche 1 bis 3, **dadurch gekennzeichnet, dass** die Sekundärantenne (52) durch Herausätzen der Aussparung (54) aus einer vollflächigen Metallfolie (56), insbesondere einer Kupfer- oder Aluminiumfolie gebildet ist.

5. System nach wenigstens einem der Ansprüche 1 bis 4, **dadurch gekennzeichnet, dass** die Induktivität der Spule (22) kleiner ist als 1 µH, bevorzugt kleiner 0,2 µH, und der Umfang der Spule (22) kleiner ist als 4 cm.

6. System nach wenigstens einem der Ansprüche 1 bis 5, **dadurch gekennzeichnet, dass** die Kapazität des Kondensators ausgewählt ist aus dem Bereich 0,1 pF bis 20 pF, bevorzugt aus dem Bereich 0,5 pF bis 5 pF.

7. Verfahren zum Herstellen eines Systems nach einem der Ansprüche 1 bis 6, mit den Verfahrensschritten:
- Bereitstellen und Koppeln eines elektronischen Speicherchips (21) mit einer Ringantenne, die eine elektrisch leitfähige Spule (22) mit nur einer Windung und einen Kondensator enthält,
- wobei der Transponder eine Spule (22) enthält, deren Umfang kleiner ist als 20 cm, und
- der Transponder auf eine Arbeitsfrequenz von 860 MHz oder mehr ausgelegt wird,
- Bereitstellen eines Gegenstand, zu dessen Kennzeichnung der Transponder bestimmt ist und der eine **Metallschicht** (56) aufweist, die nach dem Aufbringen des Transponders auf den Gegenstand als Sekundärantenne in Form einer Schlitzantenne (52) dient, die durch eine Aussparung (54) in der ansonsten vollflächigen Metallschicht (56) gebildet ist, und
- Aufbringen des Transponders auf den Gegenstand und Verbinden von Transponder und Sekundärantenne derart, dass die Sekundärantenne (52) und die Ringantenne durch eine Isolatorfolie hindurch aufgrund elektromagnetischer Wechselwirkung gekoppelt werden.

8. Verfahren nach Anspruch 7, **dadurch gekennzeichnet, dass** der Transponder und die Sekundärantenne (52) durch Aufeinanderkleben verbunden werden.

9. Verfahren nach Anspruch 7 oder 8, **dadurch gekennzeichnet, dass** der Speicherchip (21) aufgebracht, insbesondere aufgeklebt und durch Schweißen oder Bonden elektrisch mit der Spule (22) verbunden wird.

10. Verfahren nach Anspruch 9, **dadurch gekennzeichnet, dass** der Speicherchip (21), insbesondere als Chip oder Chipmodul, so aufgebracht wird, dass er direkt ohne eine Brücke an beiden Enden der Spule (22) gekoppelt wird.

11. Verfahren nach einem der Ansprüche 8 bis 10, **dadurch gekennzeichnet, dass** der Transponder mit einer Schutzschicht versehen wird, die insbesondere durch eine aufgebrachte Lack- oder Kunststoffschicht oder einen passend umfassenden Schutzkörper gebildet wird.

## Claims

1. A system consisting of a transponder and an object for whose marking the transponder is intended, wherein
- the transponder has an electronic memory chip (21) and a magnetic ring antenna,
- the ring antenna comprises an electrically conductive coil (22) having only one turn, and a capacitor,
- the circumference of the coil (22) is less than 20 cm,
- the transponder is designed for an operating frequency of 860 MHz or more
**characterized in that**
- the object to be marked has a metal layer (56), that, after application of the transponder to the object, serves as a secondary antenna in the form of a slot antenna (52), that is coupled to the ring antenna through an insulator foil by electromagnetic interaction,
wherein the slot antenna is formed by a gap (54) in the otherwise contiguous metal layer (56).

2. The system according to claim 1, **characterized in that** the secondary antenna (52) is coupled to the ring antenna through the substrate foil (3) of the ring antenna by electromagnetic interaction.

3. The system according to claim 1 or 2, **characterized in that** the insulator foil is a plastic foil, especially of a polyester foil, a PET foil, a polyimide foil or a polypropylene foil.

4. The system according to one of claims 1 to 3, **characterized in that** the secondary antenna (52) is formed by etching the gap (54) out of a contiguous metal foil (56), especially a copper or aluminum foil.

5. The system according to at least one of claims 1 to 4, **characterized in that** the inductance of the coil (22) is less than 1 µH, preferably less than 0.2 µH, and the circumference of the coil (22) is less than 4 cm.

6. The transponder according to at least one of claims 1 to 5, **characterized in that** the capacity of the capacitor is selected from the range 0.1 pF to 20 pF, preferably from the range 0.5 pF to 5 pF.

7. A method for manufacturing a system according to one of claims 1 to 6, having the method steps:
- providing and coupling an electronic memory chip (21) with a ring antenna, which comprises an electrically conductive coil (22) having only one turn, and a capacitor,
- wherein the transponder comprises a coil (22), the circumference of which is less than 20 cm,
- the transponder is designed for an operating frequency of 860 MHz or more
- providing an object for whose marking the transponder is intended and which has a metal layer (56), that, after application of the transponder to the object, serves as a secondary antenna in the form of a slot antenna (52), that is formed by a gap (54) in the otherwise contiguous metal layer (56), and
- applying the transponder to the object and joining the transponder and the secondary antenna in such a way that the secondary antenna (52) and the ring antenna are coupled through an insulator foil by electromagnetic interaction.

8. The method according to claim 7, **characterized in that** the transponder and the secondary antenna (52) are joined by affixing them on top of one another.

9. The method according to claim 7 or 8, **characterized in that** the memory chip (21) is applied, especially affixed and electrically joined with the coil (22) by welding or bonding.

10. The method according to claim 9, **characterized in that** the memory chip (21), especially as a chip or chip module, is applied such that it is coupled directly without a bridge to both ends of the coil (22).

11. The method according to one of claims 8 to 10, **characterized in that** the transponder is provided with a protective layer, which is preferably formed by an applied lacquer or plastic layer or an appropriately comprehensive protective body.

## Revendications

1. Système constitué d'un transpondeur et d'un objet à la caractérisation duquel le transpondeur est destiné, dans lequel
- le transpondeur comprend une puce mémoire électronique (21) et une antenne circulaire magnétique,
- l'antenne circulaire comprend une bobine (22) conductrice de l'électricité, n'ayant qu'une spire, et un condensateur,
- la circonférence de la bobine (22) est inférieure à 20 cm,
- le transpondeur est conçu pour une fréquence de fonctionnement de 860 MHz ou plus,
**caractérisé en ce que**
- l'objet à caractériser comprend une couche métallique (56), qui après application du transpondeur sur l'objet sert d'antenne secondaire sous forme d'une antenne fendue (52), qui est couplée à l'antenne circulaire du transpondeur en raison d'une interaction électromagnétique en traversant une feuille isolante, l'antenne fendue étant formée par un évidement (54) aménagé dans la couche métallique (56) par ailleurs en pleine surface.

2. Système selon la revendication 1, **caractérisé en ce que** l'antenne secondaire (52) est couplée à l'antenne circulaire sur la base d'une interaction électromagnétique, en traversant la feuille support (3) de l'antenne circulaire.

3. Système selon la revendication 1 ou 2, **caractérisé en ce que** la feuille isolante est une feuille plastique, en particulier une feuille de polyester, une feuille de PET, une feuille de polyimide ou une feuille de polypropylène.

4. Système selon l'une des revendications 1 à 3, **caractérisé en ce que** l'antenne secondaire (52) est formée par gravure de l'évidement (54) à partir d'une feuille métallique (56) en pleine surface, en particulier d'une feuille de cuivre ou d'aluminium.

5. Système selon au moins l'une des revendications 1 à 4, **caractérisé en ce que** l'inductance de la bobine (22) est inférieure à 1 µH, de préférence inférieure à 0,2 µH, et la circonférence de la bobine (22) est inférieure à 4 cm.

6. Système selon au moins l'une des revendications 1 à 5, **caractérisé en ce que** la capacité du condensateur est choisie dans la plage de 0,1 à 20 pF, de préférence dans la plage de 0,5 à 5 pF.

7. Procédé de fabrication d'un système selon l'une des revendications 1 à 6, comportant les étapes suivantes :
- mise à disposition et couplage d'une puce mémoire électronique (21) à une antenne circulaire, qui contient une bobine (22) conductrice de l'électricité n'ayant qu'une spire, et un condensateur,
- le transpondeur contenant une bobine (22) dont la circonférence est inférieure à 20 cm, et
- le transpondeur est configuré pour une fréquence de fonctionnement de 860 MHz ou plus,
- mise à disposition d'un objet à la caractérisation duquel est destiné le transpondeur, et qui comprend une couche métallique (56), qui après application du transpondeur sur l'objet sert d'antenne secondaire sous forme d'une antenne fendue (52), qui est formée par un évidement (54) aménagé dans la couche métallique (56) par ailleurs en pleine surface, et
- application du transpondeur sur l'objet, et assemblage du transpondeur et de l'antenne secondaire de telle sorte que l'antenne secondaire (52) et l'antenne circulaire soient couplées, du fait d'une interaction électromagnétique, par traversée d'une feuille isolante.

8. Procédé selon la revendication 7, **caractérisé en ce que** le transpondeur et l'antenne secondaire (52) sont assemblés par collage l'un sur l'autre.

9. Procédé selon la revendication 7 ou 8, **caractérisé en ce que** la puce mémoire (21) est appliquée, en particulier par collage, et est électriquement reliée à la bobine (22) par soudage ou collage.

10. Procédé selon la revendication 9, **caractérisé en ce que** la puce mémoire (21), en particulier sous forme d'une puce ou d'un module multi-puce, est appliquée de façon à être directement couplée, sans pont, aux deux extrémités de la bobine (22).

11. Procédé selon l'une des revendications 8 à 10, **caractérisé en ce que** le transpondeur est pourvu d'une couche de protection, qui est formée en particulier par une couche appliquée de vernis ou de plastique, ou d'un corps de protection l'entourant avec ajustement.
